# EUROPÄISCHE PATENTSCHRIFT

(11) **EP 1 571 386 B1**
(45) Veröffentlichungstag und Bekanntmachung des Hinweises auf die Patenterteilung: **07.07.2010**
(21) Anmeldenummer: 05003117.8
(22) Anmeldetag: 15.02.2005
(51) Int. Cl.: F16L 21/02

(54) **Dichtanordnung**
Sealing assembly
Ensemble d'étanchéité

(30) Priorität: 02.03.2004 DE 102004010576
(43) Veröffentlichungstag der Anmeldung: 07.09.2005
(73) Patentinhaber: Phoenix Dichtungstechnik GmbH, 99880 Waltershausen (DE)
(72) Erfinder: Höft, Heiko, Dipl.-Ing. (FH), 21224 Rosengarten (DE)
(74) Vertreter: Pohl, Manfred

(56) Entgegenhaltungen:
- EP-A- 0 188 300
- WO-A-00/63602
- WO-A-01/79737
- DE-A- 3 136 315
- DE-A1- 3 136 183
- DE-A1- 3 522 790
- DE-U- 1 853 047
- DE-U- 1 860 424
- DE-U- 1 900 438
- DE-U- 9 217 222
- GB-A- 2 043 802
- GB-A- 2 331 137
- US-A1- 2002 074 741

## Beschreibung

Die Erfindung betrifft eine Dichtanordnung von Rohren oder Schachtbauwerken, bestehend wenigstens aus:
- zwei aneinander stoßenden Bauteilen in Form einer Muffe und eines Spitzendes unter Bildung eines Ringspaltes, wobei Muffe und Spitzende einen Außenbereich und Innenbereich umfassen; sowie
- einer Dichtung aus polymerem Werkstoff, die den Ringspalt abdichtend überbrückt, wobei nach einer ersten Variante I die Dichtung ohne Verankerungsfuß auf das Spitzende aufgezogen ist oder nach einer zweiten Variante II die Dichtung wenigstens einen Verankerungsfuß aufweist, wobei die Verankerung insbesondere innerhalb der Muffe erfolgt.

Eine gattungsgemäße Dichtanordnung ist bei Rohren oder Schachtbauwerken weit verbreitet, wobei insbesondere auf folgende Druckschriften verwiesen wird:
DE 34 06 505 C2, DE 35 07 909 C2, DE 101 13 752 A1, EP 0 449 082 B1 und EP 0 859 183 B1. Die Muffe und das Spitzende bestehen zumeist aus erhärtetem Material (z.B. Beton, Stahlbeton, Kunstharz), wobei Beton von besonderer Bedeutung ist. Üblicherweise werden Dichtungen in Form von Dichtringen eingesetzt, die auf der Basis eines einzigen Elastomerwerkstoffes, beispielsweise NBR, hergestellt sind. Auch Verschnitte mehrerer Elastomere kommen zur Anwendung, um bestimmte Stoffeigenschaften des Elastomerwerkstoffes zu erreichen. Diese Stoffeigenschaften sind dabei auf den jeweiligen Anwendungsfall abgestimmt. So verwendet man beispielsweise Dichtungen auf der Basis NBR, wenn es zum Kontakt mit Mineralölprodukten kommen kann. Ferner ist bekannt, Dichtungen nach der Variante II im Rahmen einer Hart-Weich-Kombination herzustellen, wobei diesbezüglich insbesondere auf folgende Druckschriften verwiesen wird: DE 42 35 268 A1, EP 0 686 245 B1, WO 02/40909 A1 und US 5 566 955.

Das Dokument DE9217222U offenbart eine Dichtanordnung von Rohren oder Schachtbauwerken, bestehend aus:
- zwei aneinander stossenden Bauteilen in Form einer Muffe und eines Spitzendes unter Bildung eines Ringspaltes, wobei Muffe und Spitzende einen Aussenbereich und Innenbereich umfassen; sowie
- einer Dichtung aus polymerem Werkstoff, die den Ringspalt abdichtend überbrückt, wobei die Dichtung ohne Verankerungsfuss auf das Spitzende aufgezogen ist; wobei
- die Dichtung ein Co-Extrudat ist, umfassend einen ersten Dichtteil, der dem Aussenbereich zugewandt ist, und einen zweiten Dichtteil, der dem Innenbereich zugewandt Ist, wobei beide Dichtteile auf der Basis verschiedenartiger Polymerwerkstoffe, die sich durch unterschiedliche mechanische Eigenschaften auszeichnen, einen Haftverbund bilden und
- der erste Dichtteil dem Außenbereich und der zweite Dichtteil dem Innenbereich so zugewandt sind, dass der erste Dichtteil A nur Kontakt mit dem im Außenbereich vorkommenden Medium, und der zweite Dichtteil nur Kontakt mit dem im Innenbereich vorkommenden Medium hat.

Im Rahmen einer Weiterentwicklung besteht die Aufgabe der Erfindung darin, unabhängig von den beiden Varianten I und II eine Dichtanordnung bereitzustellen, die je nach dem Anforderungsprofil für eine Vielzahl von Anwendungsfällen möglich ist, und zwar im Rahmen einer einheitlichen Herstellungsweise.

Gelöst wird diese Aufgabe durch eine Dichtanordnung gemäß Anspruch 1 und eine Verwendung einer zwei Dichtteile umfassenden Dichtung gemäß Anspruch 9.

Da die Dichtung mit den beiden Dichtteilen herstellungsbedingt ein Co-Extrudat ist, liegt der erfindungsgemäßen Dichtanordnung ein gemeinsames Grundkonzept zugrunde. Durch die Technologie der Co-Extrusion werden nun die unterschiedlichen Polymerwerkstoffe in einem Extrusionskopf unter Temperatur und Druck verbunden. Nach der Vulkanisation besteht dann ein ausreichender Haftverbund der beiden Dichtteile.

Mit der erfindungsgemäßen Dichtanordnung ist es nun möglich, die Vorteile der einzelnen Polymerwerkstoffe in verbesserter Weise in einer Dichtung zu kombinieren. Bei einer Rohrführung gibt es einen Dichtteil, der dem Innenbereich bzw. Rohrinneren zugewandt ist und somit nur Kontakt mit dem im Rohr vorhandenen Medium haben kann. Der andere Dichtteil zeigt zum Außenbereich bzw. Rohräußeren und hat somit Kontakt mit dem außerhalb der Rohrleitung vorkommenden Medium. Bei der neuen Dichtanordnung wird nun der Kontaktbereich außen als auch innen mit demjenigen Polymerwerkstoff abgedichtet, welcher die dafür günstigsten Stoffeigenschaften besitzt.

Hinsichtlich des ersten Dichtteiles A und des zweiten Dichtteiles B gibt es folgende Gruppen an Werkstoffkonstellationen, die in der Tabelle 1 festgehalten sind und die mit Ausnahme der Gruppe 2 die Erfindung darstellen. Von besonderer Bedeutung sind dabei die Gruppen 1, 3 und 4.

**Tabelle 1**

| Gruppe | erster Dichtteil A | zweiter Dichtteil B |
|---|---|---|
| 1 | erstes Elastomer | zweites Elastomer |
| 2 | erstes TPE | zweites TPE |
| 3 | Elastomer | TPE |
| 4 | TPE | Elastomer |
| 5 | Elastomer | Thermoplast |
| 6 | Thermoplast | Elastomer |
| 7 | TPE | Thermoplast |
| 8 | Thermoplast | TPE |

Hinsichtlich der Gruppen 3 bis 6 kommen vorzugsweise Elastomerwerkstoffe auf der Basis von Naturkautschuk (NR), Butadien-Kautschuk (BR), Chloropren (CR), Nitrilkautschuk (NBR), Styrol-Butadien-Kautschuk (SBR), eines Ethylen-Propylen-Dien-Mischpolymerisates (EPDM) oder deren Verschnitte (z.B. SBR/NR, SBR/BR) zur Anwendung. Hier handelt es sich dabei um eine vulkanisierte Kautschukmischung, wobei die oben genannten Kautschuk- bzw. Verschnittkomponenten jeweils zumeist in einem Anteil von 30 bis 70 Gew.-% vorkommen. Die Kautschukmischung weist einen Vernetzer oder Vernetzersystem auf. Das Vernetzersystem umfasst dabei einen Vernetzer und/oder Vulkanisationsaktivator sowie einen Beschleuniger. Weitere
übliche Mischungsingredienzien, und zwar einzeln oder insbesondere kombinativ, sind Füllstoffe, Verarbeitungshilfsmittel, Weichmacher, Alterungsschutzmittel und Stabilisatoren. Diesbezüglich wird auf den allgemeinen Stand der Kautschukmischungstechnologie verwiesen.

Innerhalb der Gruppe 1 sind nur die in der Tabelle 2 festgehaltenen Werkstoffkombinationenerfindungsgemäß.

**Tabelle 2**

| erster Dichtteil A | zweiter Dichtteil B |
|---|---|
| SBR | EPDM |
| EPDM | SBR |
| NBR | EPDM |
| EPDM | NBR |
| NBR | SBR |
| SBR | NBR |

Neben guten elastischen Eigenschaften all dieser Werkstofftypen (SBR, EPDM, NBR) zeichnen sich diese auch durch individuelle Kriterien aus, nämlich Abriebfestigkeit (SBR), Witterungsbeständigkeit (EPDM) sowie Quellbeständigkeit gegen Öle, Fette und Treibstoffe (NBR). Je nach Anwendungsfall bzw. Richtlinien für die beiden Dichteile A und B kann im Rahmen des Co-Extrudates die entsprechende Werkstoffkombination gewählt werden, und zwar im Sinne der im Innen- und Außenbereich der Dichtanordnung vorhandenen Mediensituation.

Was die Gruppen 3, 4, 7 und 8 betrifft, so gelangen vorzugsweise thermoplastische Elastomere (TPE) auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung. Soweit eine Vernetzung vorliegt, ist der wesentliche Bestandteil der Mischungsingredienzien der Vernetzer bzw. das Vernetzersystem. Die übrigen Mischungsingredienzien können alle Rohstoffkomponenten umfassen, die das Eigenschaftsbild des TPE-Werkstoffes positiv beeinflussen. Dies sind zum Beispiel Füllstoffe, Alterungsschutzmittel, UV-Stabilisatoren, Fließhilfsmittel und Prozesshilfsmittel. Diesbezüglich wird auf den allgemeinen Stand der TPE-Technologie verwiesen.

Von besonderer Bedeutung ist ein TPE-Werkstoff, der aus einem Verschnitt aus einem thermoplastischen Kunststoff (Thermoplast) und einem mindestens teilvernetzten Kautschuk, insbesondere auf Basis EPDM, besteht. Der bevorzugt eingesetzte Kunststoff ist ein Polypropylen auf der Basis eines Homopolymeren, Copolymeren oder Blockcopolymeren. Der Kautschuk weist einen Vernetzungsgrad von insbesondere > 90 % auf, wobei zum Verstrecken des Kautschuks ein Weichmacher eingesetzt wird. Ansonsten gelten auch hier die oben genannten TPE-Mischungsingredienzien. Hinsichtlich Details (z.B. Mengenanteile innerhalb der TPE-Mischung) dieses bevorzugten TPE-Werkstoffes wird auf die Druckschrift DE 103 36 424 A1 verwiesen.

Im Rahmen einer neueren Entwicklung wird den TPE-Werkstoffen zusätzlich ein Oberflächenmodifikator beigemischt, der gleichmäßig an die Oberfläche migriert, und zwar unter Bildung einer durchgehenden, wachsartigen, festen Schicht (DE 103 36 424 A1). Diese Schicht ist glatt und ermöglicht aufgrund des niedrigen Reibungskoeffizienten eine einfache Montage von Dichtungen. In diesem Zusammenhang sind insbesondere die Werkstoffkombinationen gemäß Gruppen 3 und 4 von Bedeutung.

Der Einsatz eines thermoplastischen Kunststoffes, insbesondere Polyvinylchlorid (PVC), ist dann von Interesse, wenn bei dem Dichtkonzept die elastischen wie auch plastischen Eigenschaften der Dichtung verstärkt zum Tragen kommen sollen. Hier sind die Werkstoffkombinationen gemäß Gruppen 5 bis 8 von Bedeutung.

Darüber hinaus ist es bekannt, den Polymerwerkstoffen, insbesondere den Elastomerwerkstoffen, einen aktiven Inhibitor beizumischen, der die Vermehrung von Mikroorganismen verhindert. Dieser mikrobenbeständige Werkstoff mit biologischen Eigenschaften ist insbesondere im Abwasserbereich von Bedeutung. Diesbezüglich wird insbesondere auf die Druckschrift DE 102 58 551 A1 verwiesen, die sich mit einer mikrobenbeständigen Klärbeckenmembran befasst.

Weiterhin sind auch unterschiedliche Härten der einzelnen Dichtteile A und B möglich, um die gewünschten Stoffeigenschaften zu erzielen. Die Härten können dabei zwischen 30° und 80° Shore variieren. Es ist jedoch ebenso möglich, dass die beiden Dichtteile die gleiche Härte besitzen.

Die Erfindung wird nun anhand von Ausführungsbeispielen unter Bezugnahme auf schematische Zeichnungen erläutert. Es zeigen:
- Fig. 1: eine Dichtanordnung mit aufgezogener Spitzenddichtung;
- Fig. 2: eine Spitzenddichtung gemäß Fig. 1;
- Fig. 3: eine weitere Spitzenddichtung;
- Fig. 4: eine prüfbare Spitzenddoppeldichtung;
- Fig. 5: eine vorgeschmierte Spitzenddichtung mit geschlossenem Gleitmantel;
- Fig. 6: eine vorgeschmierte Spitzenddichtung mit offenem Gleitmantel;
- Fig. 7: eine Dichtanordnung mit einer in der Muffe verankerten Dichtung;
- Fig. 8: eine verankerte Dichtung gemäß Fig. 7;
- Fig. 9: eine verankerte Dichtung mit Lastenausgleich;
- Fig. 10: eine vorgeschmierte verankerte Dichtung mit geschlossenem Gleitmantel.

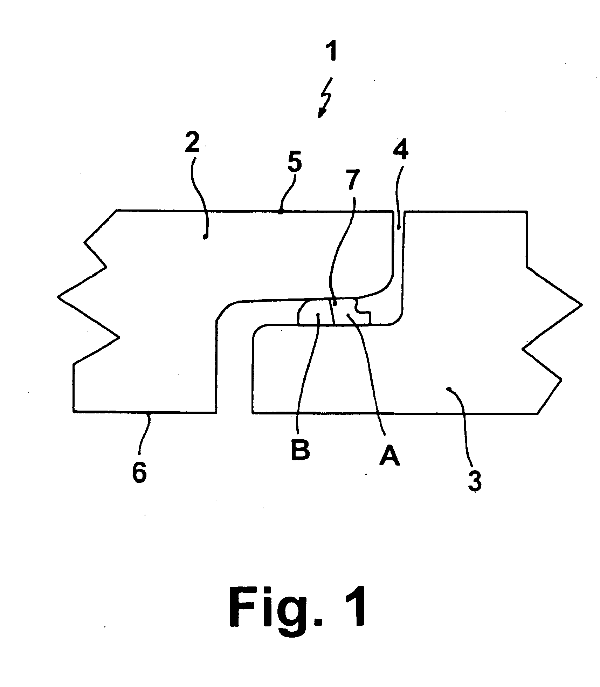

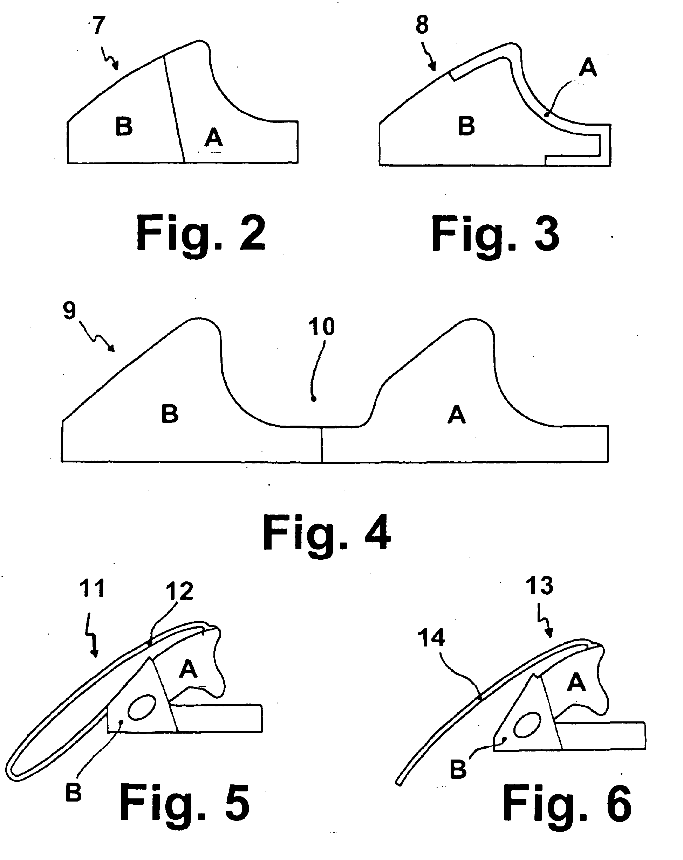

Nach den Fig. 1 bis 6 sind die Dichtungen 7, 8, 9, 11 und 13 mit den jeweils beiden Dichtteilen A und B ohne Verankerungsfuß auf das Spitzende 3 aufgezogen. Bei den Ausführungsbeispielen gemäß Fig. 5 und 6 sind durch die Verwendung eines geschlossenen Gleitmantels 11 (Fig. 5) bzw. offenen Gleitmantels 14 (Fig. 6) die jeweiligen Spitzenddichtungen 12 und 13 zusätzlich vorgeschmiert.

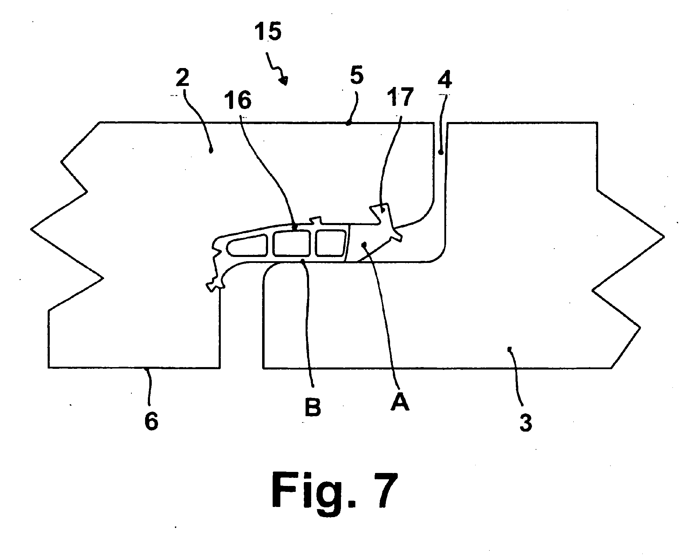

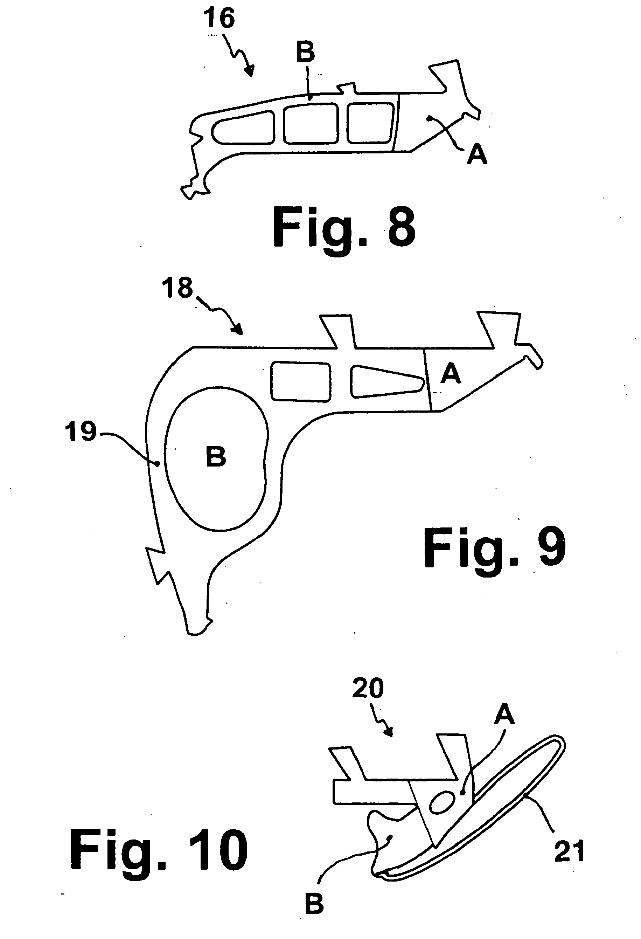

Nach den Fig. 7 bis 10 weisen die Dichtungen 16, 18 und 20 mit den beiden Dichtteilen A und B wenigstens einen Verankerungsfuß 17, insbesondere mehrere Verankerungsfüße, auf, wobei die Verankerung innerhalb der Muffe 2 erfolgt (verankerte Muffendichtung). Bei dem Ausführungsbeispiel gemäß Fig. 9 ist der Dichtteil B der Dichtung **18** zudem mit einem Lastenausgleich **19** versehen (EP 0 853 209 B1). Bei dem Ausführungsbeispiel gemäß Fig. 10 ist die Dichtung **20** mittels eines geschlossenen Gleitmantels **21** vorgeschmiert.

Hinsichtlich vorgeschmierter Dichtungen wird insbesondere auf den Stand der Technik gemäß EP 0 011 919 B1 und EP 0 888 511 B1 verwiesen.

Weitere konstruktive Details werden in Verbindung mit der Bezugszeichenliste erläutert.

In Verbindung mit den Ausführungsbeispielen gemäß Fig. 1 bis 10 soll im Folgenden ein Anwendungsfall erläutert werden, der die Vorteile der erfindungsgemäßen Dichtanordnung **1** bzw. **15** darlegt.

Der Außenbereich **5** eines Abwasserrohres steht im Kontakt mit einem ölgefährdeten bzw. bereits ölbelasteten Erdreich. Der Innenbereich **6** dieses Rohres wird von Abwasser umspült. Unter diesem Gesichtspunkt basiert der erste Dichtteil A auf dem ölbeständigen NBR und der zweite Dichtteil B auf EPDM, der mittels eines beigemischten Inhibitors mikrobenbeständig ist.

Beide Dichtteile A und B zeichnen sich durch gute elastische (mechanische) Eigenschaften aus, verbunden mit zusätzlich besonderen chemischen Eigenschaften bei Dichtteil A sowie biologischen Eigenschaften bei Dichtteil B.

Auch wenn für jeden Dichtteil A und B zumeist eine verschnittfreie Kautschukkomponente zum Einsatz gelangt, können erfindungsgemäß gegebenenfalls auch für einen oder beide Dichtteil/e Verschnitte eingesetzt werden, wobei auf folgende zwei Beispiele gemäß Tabelle 3 verwiesen wird.

**Tabelle 3**

| erster Dichtteil A | zweiter Dichtteil B |
|---|---|
| SBR/NR | EPDM |
| SBR/BR | EPDM |

Für den Dichtteil A ist dabei jeweils SBR die Hauptkautschukkomponente.

Die Mikrobenbeständigkeit des zweiten Dichtteiles B in der oben beschriebenen Art und Weise wäre auch hier vorteilhaft.

### Bezugszeichenliste

- 1: Dichtanordnung
- 2: Muffe
- 3: Spitzende
- 4: Ringspalt
- 5: Außenbereich
- 6: Innenbereich
- 7: aufgezogene Spitzenddichtung
- 8: aufgezogene Spitzenddichtung
- 9: aufgezogene Spitzenddoppeldichtung
- 10: Prüfraum
- **11**: vorgeschmierte Spitzenddichtung
- 12: geschlossener Gleitmantel
- 13: vorgeschmierte Spitzenddichtung
- 14: offener Gleitmantel
- 15: Dichtanordnung
- 16: verankerte Dichtung
- 17: Verankerungsfuß
- 18: verankerte Dichtung
- 19: Lastenausgleich
- 20: verankerte Dichtung
- 21: geschlossener Gleitmantel
- A: erster Dichtteil
- B: zweiter Dichtteil

## Patentansprüche

1. Dichtanordnung (1, 15) von Rohren oder Schachtbauwerken, bestehend wenigstens aus:
- zwei aneinander stossenden Bauteilen in Form einer Muffe (2) und eines Spitzendes (3) unter Bildung eines Ringspaltes (4), wobei Muffe und Spitzende einen Aussenbereich (5) und Innenbereich (6) umfassen; sowie
- einer Dichtung (7, 8, 9, 11, 13, 16, 18, 20) aus polymerem Werkstoff, die den Ringspalt (4) abdichtend überbrückt, wobei nach einer ersten Variante I die Dichtung (7, 8, 9, 11, 13) ohne Verankerungsfuss auf das Spitzende (3) aufgezogen ist oder nach einer zweiten Variante II die Dichtung (16, 18, 20) wenigstens einen Verankerungsfuss (17) aufweist, wobei die Verankerung insbesondere innerhalb der Muffe (2) erfolgt; wobei
- die Dichtung (7, 8, 9, 11, 13, 16, 18, 20) ein Co-Extrudat ist, umfassend einen ersten Dichtteil (A), der dem Aussenbereich (5) zugewandt ist, und einen zweiten Dichtteil (B), der dem Innenbereich (6) zugewandt ist, wobei beide Dichtteile (A, B) auf der Basis verschiedenartiger Polymerwerkstoffe, die sich durch unterschiedliche mechanische und/oder chemische und/oder biologische Eigenschaften auszeichnen, einen Haftverbund bilden und
- der erste Dichtteil A dem Außenbereich und der zweite Dichtteil B dem Innenbereich so zugewandt sind, dass der erste Dichtteil A nur Kontakt mit dem im Außenbereich vorkommenden Medium, und der zweite Dichtteil B nur Kontakt mit dem im Innenbereich vorkommenden Medium hat und wobei
a) beide Dichtteil (A, B) aus einem elastomeren Werkstoff bestehen, wobei
aa)für den ersten Dichtteil (A) SBR und für den zweiten Dichtteil (B) EPDM als Elastomerwerkstoffbasis zur Anwendung kommen, oder
ab)für den ersten Dichtteil (A) EPDM und für den zweiten Dichtteil (B) SBR als Elastomerwerkstoffbasis zur Anwendung kommen, oder
ac)für den ersten Dichtteil (A) NBR und für den zweiten Dichtteil (B) EPDM als Elastomerwerkstoffbasis zur Anwendung kommen, oder
ad)für den ersten Dichtteil (A) EPDM und für den zweiten Dichtteil (B) NBR als Elastomerwerkstoffbasis zur Anwendung kommen, oder
ae)für den ersten Dichtteil (A) NBR und für den zweiten Dichtteil (B) SBR als Elastomerwerkstoffbasis zur Anwendung kommen, oder
af)für den ersten Dichtteil (A) SBR und für den zweiten Dichtteil (B) NBR als Elastomerwerkstoffbasis zur Anwendung kommen, oder
b) der erste Dichtteile (A) aus einem elastomeren Werkstoff und der zweite Dichtteil (B) aus einem thermoplastischen Elastomer besteht, oder
c) der erste Dichtteil (A) aus einem thermoplastischen Elastomer und der zweite Dichtteil (B) aus einem elastomeren Werkstoff besteht, oder
d) der erste Dichtteil (A) aus einem elastomeren Werkstoff und der zweite Dichtteil (B) aus einem thermoplastischen Kunststoff besteht, oder
e) der erste Dichtteil (A) aus einem thermoplastischen Kunststoff und der zweite Dichtteil (B) aus einem elastomeren Werkstoff besteht, oder
f) der erste Dichtteil (A) aus einem thermoplastischen Elastomer und der zweite Dichtteil (B) aus einem thermoplastischen Kunststoff besteht, oder
g) der erste Dichtteil (A) aus einem thermoplastischen Kunststoff und der zweite Dichtteil (B) aus einem thermoplastischen Elastomer besteht.

2. Dichtanordnung nach Anspruch 1, **dadurch gekennzeichnet, dass** thermoplastische Elastomere (TPE) auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung kommen.

3. Dichtanordnung nach Anspruch 1, **dadurch gekennzeichnet, dass** das thermoplastische Elastomer (TPE) ein Verschnitt aus einem thermoplastischen Kunststoff und einem mindestens teilvernetzten Kautschuk, insbesondere auf Basis eines Ethylen-Propylen-Dien-Mischpolymerisates (EPDM), ist.

4. Dichtanordnung nach Anspruch 1, **dadurch gekennzeichnet, dass** der thermoplastische Kunststoff Polyvinylchlorid (PVC) ist.

5. Dichtanordnung nach einem der Ansprüche 1 bis 4, **dadurch gekennzeichnet, dass** der erste Dichtteil (A) und zweite Dichtteil (B) die gleiche Shore-Härte aufweisen.

6. Dichtanordnung nach einem der Ansprüche 1 bis 4, **dadurch gekennzeichnet, dass** der erste Dichtteil (A) und zweite Dichtteil (B) verschiedene Shore-Härten aufweisen.

7. Dichtanordnung nach Anspruch 5 oder 6, **dadurch gekennzeichnet, dass** für den ersten Dichtteil (A) und zweiten Dichtteil (B) der Shore-Härte-Bereich 30 DEG bis 80 DEG beträgt.

8. Dichtanordnung nach einem der Ansprüche 1 bis 7, **dadurch gekennzeichnet, dass** der Haftverbund zwischen dem ersten Dichtteil (A) und zweiten Dichtteil (B) im Rahmen der Co-Extrusion unter Temperatur und Druck gebildet ist.

9. Verwendung einer zwei Dichtteile (A, B) umfassenden Dichtung zur abdichtenden Überbrückung eines Ringspaltes einer Dichtanordnung von Rohren oder Schachtbauwerken, wobei die Dichtanordnung zwei unter Bildung des Ringspaltes aneinander stossende Bauteile in Form einer Muffe und eines Spitzendes aufweist und Muffe und Spitzende einen Aussenbereich und Innenbereich umfassen, so dass der Dichtteil A dem Außenbereich und der Dichtteil B dem Innenbereich so zugewendet wird, dass der Dichtteil A nur Kontakt mit dem im Außenbereich vorkommenden Medium, und der Dichtteil B nur mit dem im Innenbereich vorkommenden Medium hat, so dass der Kontaktbereich außen und innen mit dem Polymerwerkstoff abgedichtet wird, welcher die dafür günstigsten Stoffeigenschaften besitzt, und wobei die Dichtung ein Co-Extrudat ist und die Dichtteile (A, B) auf der Basis verschiedenartiger Polymerwerkstoffe, die sich durch unterschiedliche mechanische und/oder chemische und/oder biologische Eigenschaften auszeichnen, einen Haftverbund bilden,
wobei
a) beide Dichtteile (A, B) aus einem elastomeren Werkstoff bestehen, wobei
aa)für den ersten Dichtteil (A) SBR und für den zweiten Dichtteil (B) EPDM als Elastomerwerkstoffbasis zur Anwendung kommen, oder
ab) für den ersten Dichtteil (A) EPDM und für den zweiten Dichtteil (B) SBR als Elastomerwerkstoffbasis zur Anwendung kommen, oder
ac)für den ersten Dichtteil (A) NBR und für den zweiten Dichtteil (B) EPDM als Elastomerwerkstoffbasis zur Anwendung kommen, oder
ad)für den ersten Dichtteil (A) EPDM und für den zweiten Dichtteil (B) NBR als Elastomerwerkstoffbasis zur Anwendung kommen, oder
ae)für den ersten Dichtteil (A) NBR und für den zweiten Dichtteil (B) SBR als Elastomerwerkstoffbasis zur Anwendung kommen, oder
af)für den ersten Dichtteil (A) SBR und für den zweiten Dichtteil (B) NBR als Elastomerwerkstoffbasis zur Anwendung kommen, oder
b) der erste Dichtteil (A) aus einem elastomeren Werkstoff und der zweite Dichtteil (B) aus einem thermoplastischen Elastomer besteht, oder
c) der erste Dichtteil (A) aus einem thermoplastischen Elastomer und der zweite Dichtteil (B) aus einem elastomeren Werkstoff besteht, oder
d) der erste Dichtteil (A) aus einem elastomeren Werkstoff und der zweite Dichtteil (B) aus einem thermoplastischen Kunststoff besteht, oder
e) der erste Dichtteil (A) aus einem thermoplastischen Kunststoff und der zweite Dichtteil (B) aus einem elastomeren Werkstoff besteht, oder
f) der erste Dichtteil (A) aus einem thermoplastischen Elastomer und der zweite Dichtteil (B) aus einem thermoplastischen Kunststoff besteht, oder
g) der erste Dichtteil (A) aus einem thermoplastischen Kunststoff und der zweite Dichtteil (B) aus einem thermoplastischen Elastomer besteht.

10. Verwendung nach Anspruch 9, **dadurch gekennzeichnet, dass** thermoplastische Elastomere (TPE) auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung kommen.

11. Verwendung nach Anspruch 9, **dadurch gekennzeichnet, dass** das thermoplastische Elastomer (TPE) ein Verschnitt aus einem thermoplastischen Kunststoff und einem mindestens teilvernetzten Kautschuk, insbesondere auf Basis eines Ethylen-Propylen-Dien-Mischpolymerisates (EPDM), ist.

12. Verwendung nach Anspruch 9, **dadurch gekennzeichnet, dass** der thermoplastische Kunststoff Polyvinylchlorid (PVC) ist.

13. Verwendung nach einem der Ansprüche 9 bis 12, **dadurch gekennzeichnet, dass** der erste Dichtteil (A) und zweite Dichtteil (B) die gleiche Shore-Härte aufweisen.

14. Verwendung nach einem der Ansprüche 9 bis 12, **dadurch gekennzeichnet, dass** der erste Dichtteil (A) und zweite Dichtteil (B) verschiedene Shore-Härten aufweisen.

15. Verwendung nach Anspruch 13 oder 14, **dadurch gekennzeichnet, dass** für den ersten Dichtteil (A) und zweiten Dichtteil (B) der Shore-Härte-Bereich 30 DEG bis 80 DEG beträgt.

16. Verwendung nach einem der Ansprüche 9 bis 15, **dadurch gekennzeichnet, dass** der Haftverbund zwischen dem ersten Dichtteil (A) und zweiten Dichtteil (B) im Rahmen der Co-Extrusion unter Temperatur und Druck gebildet ist.

## Claims

1. Sealing arrangement (1, 15) for pipes or manhole structures, consisting of at least:
- two components in abutment with one another in the form of a socket (2) and a spigot (3) forming an annular gap (4), the socket and spigot comprising an outer region (5) and an inner region (6); as well as
- a seal (7, 8, 9, 11, 13, 16, 18, 20) consisting of polymer material which sealingly bridges the annular gap (4), according to a first variant I the seal (7, 8, 9, 11, 13) being pulled onto the spigot (3) without an anchoring foot or according to a second variant II the seal (16, 18, 20) comprising at least one anchoring foot (17), the anchoring taking place, in particular, inside the socket (2); wherein
- the seal (7, 8, 9, 11, 13, 16, 18, 20) is a co-extrudate comprising a first sealing part (A) which faces the outer region (5) and a second sealing part (B) which faces the inner region (6), both sealing parts (A, B) based on different types of polymer material, which are **characterised by** different mechanical and/or chemical and/or biological properties, forming an adhesive bond and
- the first sealing part A faces the outer region and the second sealing part B facing the inner region, such that the first sealing part A only has contact with the medium located in the outer region and the second sealing part B only has contact with the medium located in the inner region, and wherein
a) both sealing parts (A, B) consist of an elastomeric material,
aa) SBR being used for the first sealing part (A) and EPDM being used for the second sealing part (B) as an elastomeric material base, or
ab) EPDM being used for the first sealing part (A) and SBR being used for the second sealing part (B) as an elastomeric material base, or
ac) NBR being used for the first sealing part (A) and EPDM being used for the second sealing part (B) as an elastomeric material base, or
ad) EPDM being used for the first sealing part (A) and NBR being used for the second sealing part (B) as an elastomeric material base, or
ae) NBR being used for the first sealing part (A) and SBR being used for the second sealing part (B) as an elastomeric material base, or
af) SBR being used for the first sealing part (A) and NBR being used for the second sealing part (B) as an elastomeric material base, or
b) the first sealing part (A) consists of an elastomeric material and the second sealing part (B) consists of a thermoplastic elastomer, or
c) the first sealing part (A) consists of a thermoplastic elastomer and the second sealing part (B) consists of an elastomeric material, or
d) the first sealing part (A) consists of an elastomeric material and the second sealing part (B) consists of a thermoplastic plastic material, or
e) the first sealing part (A) consists of a thermoplastic plastic material and the second sealing part (B) consists of an elastomeric material, or
f) the first sealing part (A) consists of a thermoplastic elastomer and the second sealing part (B) consists of a thermoplastic plastic material, or
g) the first sealing part (A) consists of a thermoplastic plastic material and the second sealing part (B) consists of a thermoplastic elastomer.

2. Sealing arrangement according to Claim 1, **characterised in that** thermoplastic elastomers (TPE) based on styrene (TPE-S), non-cross-linked or partially cross-linked olefin-based thermoplastic elastomers (TPE-O) or fully cross-linked olefin-based thermoplastic elastomers (TPE-V) are used.

3. Sealing arrangement according to Claim 1, **characterised in that** the thermoplastic elastomer (TPE) is a blend of a thermoplastic plastic material and an at least partially cross-linked rubber, in particular based on an ethylene-propylene-diene copolymer (EPDM).

4. Sealing arrangement according to Claim 1, **characterised in that** the thermoplastic plastic material is polyvinylchloride (PVC).

5. Sealing arrangement according to one of Claims 1 to 4, **characterised in that** the first sealing part (A) and second sealing part (B) have the same Shore hardness.

6. Sealing arrangement according to one of Claims 1 to 4, **characterised in that** the first sealing part (A) and second sealing part (B) have different Shore hardnesses.

7. Sealing arrangement according to Claim 5 or 6, **characterised in that** for the first sealing part (A) and second sealing part (B) the Shore hardness range is 30 degrees to 80 degrees.

8. Sealing arrangement according to one of Claims 1 to 7, **characterised in that** the adhesive bond between the first sealing part (A) and second sealing part (B) is formed during the course of co-extrusion under temperature and pressure.

9. Use of a seal comprising two sealing parts (A, B) for sealingly bridging an annular gap of a sealing arrangement for pipes or manhole structures, the sealing arrangement comprising two components in abutment with one another in the form of a socket and a spigot, forming the annular gap, and the socket and spigot comprising an outer region and an inner region, so that the sealing part A faces the outer region and the sealing part B faces the inner region, such that the sealing part A only has contact with the medium located in the outer region and the sealing part B only has contact with the medium located in the inner region, so that the contact region is sealed on the outside and inside with the polymer material, which has the material properties appropriate therefor, the seal being a co-extrudate and the sealing parts (A, B) based on different types of polymer material, which are **characterised by** different mechanical and/or chemical and/or biological properties, forming an adhesive bond,
a) both sealing parts (A, B) consisting of an elastomeric material,
aa) SBR being used for the first sealing part (A) and EPDM being used for the second sealing part (B) as an elastomeric material base, or
ab) EPDM being used for the first sealing part (A) and SBR being used for the second sealing part (B) as an elastomeric material base, or
ac) NBR being used for the first sealing part (A) and EPDM being used for the second sealing part (B) as an elastomeric material base, or
ad) EPDM being used for the first sealing part (A) and NBR being used for the second sealing part (B) as an elastomeric material base, or
ae) NBR being used for the first sealing part (A) and SBR being used for the second sealing part (B) as an elastomeric material base, or
af) SBR being used for the first sealing part (A) and NBR being used for the second sealing part (B) as an elastomeric material base, or
b) the first sealing part (A) consisting of an elastomeric material and the second sealing part (B) consisting of a thermoplastic elastomer, or
c) the first sealing part (A) consisting of a thermoplastic elastomer and the second sealing part (B) consisting of an elastomeric material, or
d) the first sealing part (A) consisting of an elastomeric material and the second sealing part (B) consisting of a thermoplastic plastic material, or
e) the first sealing part (A) consisting of a thermoplastic plastic material and the second sealing part (B) consisting of an elastomeric material, or
f) the first sealing part (A) consisting of a thermoplastic elastomer and the second sealing part (B) consisting of a thermoplastic plastic material, or
g) the first sealing part (A) consisting of a thermoplastic plastic material and the second sealing part (B) consisting of a thermoplastic elastomer.

10. Use according to Claim 9, **characterised in that** thermoplastic elastomers (TPE) based on styrene (TPE-S), non-cross-linked or partially cross-linked olefin-based thermoplastic elastomers (TPE-O) or fully cross-linked olefin-based thermoplastic elastomers (TPE-V) are used.

11. Use according to Claim 9, **characterised in that** the thermoplastic elastomer (TPE) is a blend of a thermoplastic material and an at least partially cross-linked rubber, in particular based on an ethylene-propylene-diene copolymer (EPDM).

12. Use according to Claim 9, **characterised in that** the thermoplastic plastic material is polyvinylchloride (PVC).

13. Use according to one of Claims 9 to 12, **characterised in that** the first sealing part (A) and second sealing part (B) have the same Shore hardness.

14. Use according to one of Claims 9 to 12, **characterised in that** the first sealing part (A) and second sealing part (B) have different Shore hardnesses.

15. Use according to Claim 13 or 14, **characterised in that** for the first sealing part (A) and second sealing part (B) the Shore hardness range is 30 degrees to 80 degrees.

16. Use according to one of Claims 9 to 15, **characterised in that** the adhesive bond between the first sealing part (A) and second sealing part (B) is formed during the course of co-extrusion under temperature and pressure.

## Revendications

1. Dispositif d'étanchéité (1, 15) pour tuyaux ou structures de puits, consistant au moins dans :
- deux éléments jointifs sous la forme d'un manchon (2) et d'une extrémité pointue (3) créant un interstice annulaire (4), le manchon et l'extrémité pointue comprenant une zone extérieure (5) et une zone intérieure (6) ; ainsi que dans
- un joint (7, 8, 9, 11, 13, 16, 18, 20) en matériau polymère, qui chevauche l'interstice annulaire (4) en assurant son étanchéité, selon une première variante I, le joint (7, 8, 9, 11, 13) recouvrant sans pied d'ancrage l'extrémité pointue (3) ou selon une deuxième variante II, le joint (16, 18, 20) comportant au moins un pied d'ancrage (17), l'ancrage s'effectuant notamment à l'intérieur du manchon (2) ;
- le joint (7, 8, 9, 11, 13, 16, 18, 20) étant un produit de co-extrusion, comportant une première pièce d'étanchéité (A), qui est dirigée vers la zone extérieure (5) et une deuxième pièce d'étanchéité (B), qui est dirigée vers la zone intérieure (6), les deux pièces d'étanchéité (A, B) formant une liaison par adhérence sur la base de matériaux polymère de types divers, qui se distinguent par différentes caractéristiques mécaniques et/ou chimiques et/ou biologiques et
- la première pièce d'étanchéité (A) étant dirigée vers la zone extérieure et la deuxième pièce d'étanchéité (B) étant dirigée vers la zone intérieure, de sorte que la première pièce d'étanchéité (A) n'entre en contact qu'avec le fluide se trouvant dans la zone extérieure et la deuxième pièce d'étanchéité (B) n'entre en contact qu'avec le fluide se trouvant dans la zone intérieure,
a) les deux pièces d'étanchéité (A, B) consistant dans un matériau polymère,
aa) en tant que base de matériau polymère, du SBR étant utilisé pour la première pièce d'étanchéité (A) et de l'EPDM étant utilisé pour la deuxième pièce d'étanchéité (B) ou
ab) en tant que base de matériau polymère, de l'EPDM étant utilisé pour la première pièce d'étanchéité (A) et du SBR étant utilisé pour la deuxième pièce d'étanchéité (B) ou
ac) en tant que base de matériau polymère, du NBR étant utilisé pour la première pièce d'étanchéité (A) et de l'EPDM étant utilisé pour la deuxième pièce d'étanchéité (B) ou
ad) en tant que base de matériau polymère, de l'EPDM étant utilisé pour la première pièce d'étanchéité (A) et du NBR étant utilisé pour la deuxième pièce d'étanchéité (B) ou
ae) en tant que base de matériau polymère, du NBR étant utilisé pour la première pièce d'étanchéité (A) et du SBR étant utilisé pour la deuxième pièce d'étanchéité (B) ou
af) en tant que base de matériau polymère, du SBR étant utilisé pour la première pièce d'étanchéité (A) et du NBR étant utilisé pour la deuxième pièce d'étanchéité (B) ou
b) la première pièce d'étanchéité (A) consistant dans un matériau élastomère et la deuxième pièce d'étanchéité (B) consistant dans un élastomère thermoplastique ou
c) la première pièce d'étanchéité (A) consistant dans un élastomère thermoplastique et la deuxième pièce d'étanchéité (B) consistant dans un matériau élastomère ou
d) la première pièce d'étanchéité (A) consistant dans un matériau élastomère et la deuxième pièce d'étanchéité (B) consistant dans une matière synthétique thermoplastique ou
e) la première pièce d'étanchéité (A) consistant dans une matière synthétique thermoplastique et la deuxième pièce d'étanchéité (B) consistant dans un matériau élastomère ou
f) la première pièce d'étanchéité (A) consistant dans un élastomère thermoplastique et la deuxième pièce d'étanchéité (B) consistant dans une matière synthétique thermoplastique ou
g) la première pièce d'étanchéité (A) consistant dans une matière synthétique thermoplastique et la deuxième pièce d'étanchéité (B) consistant dans un élastomère thermoplastique.

2. Dispositif d'étanchéité selon la revendication 1, **caractérisé en ce qu'**on utilise des élastomères thermoplastiques (TPE) sur base de styrène (TFE-S), des élastomères thermoplastiques non réticulés ou partiellement réticulés sur base d'oléfine (TPE-O) ou des élastomères thermoplastiques entièrement réticulés sur base d'oléfine (TPE-V).

3. Dispositif d'étanchéité selon la revendication 1, **caractérisé en ce que** l'élastomère thermoplastique (TPE) est un coupage d'une matière synthétique thermoplastique et d'un caoutchouc au moins partiellement réticulé, notamment sur la base d'un produit polymérisé mixte d'éthylène-propylène-diène (EPDM).

4. Dispositif d'étanchéité selon la revendication 1, **caractérisé en ce que** la matière synthétique thermoplastique est du polychlorure de vinyle (PVC).

5. Dispositif d'étanchéité selon l'une quelconque des revendications 1 à 4, **caractérisé en ce que** la première pièce d'étanchéité (A) et la deuxième pièce d'étanchéité (B) ont la même dureté Shore.

6. Dispositif d'étanchéité selon l'une quelconque des revendications 1 à 4, **caractérisé en ce que** la première pièce d'étanchéité (A) et la deuxième pièce d'étanchéité (B) ont différentes duretés Shore.

7. Dispositif d'étanchéité selon la revendication 5 ou 6, **caractérisé en ce que** pour la première pièce d'étanchéité (A) et pour la deuxième pièce d'étanchéité (B), l'ordre de dureté Shore est de 30 DEG à 80 DEG.

8. Dispositif d'étanchéité selon l'une quelconque des revendications 1 à 7, **caractérisé en ce que** la liaison par adhérence entre la première pièce d'étanchéité (A) et la deuxième pièce d'étanchéité (B) est créée dans le cadre de la co-extrusion, sous température et sous pression.

9. Utilisation d'un joint comprenant deux pièces d'étanchéité (A, B) pour le recouvrement assurant l'étanchéité d'un interstice annulaire d'un dispositif d'étanchéité de tuyaux ou de structures de puits, le dispositif d'étanchéité comprenant deux éléments jointifs sous la forme d'un manchon et d'une extrémité pointue créant l'interstice annulaire et le manchon et l'extrémité pointue comprenant une zone extérieure et une zone intérieure, de sorte que la pièce d'étanchéité A soit dirigée vers la zone extérieure et la pièce d'étanchéité B soit dirigée vers la zone intérieure, de telle sorte que la pièce d'étanchéité A n'entre en contact qu'avec le fluide se trouvant dans la zone extérieure et la pièce d'étanchéité B n'entre en contact qu'avec le fluide se trouvant dans la zone intérieure, de sorte que l'étanchéité de la zone de contact extérieure et intérieure soit assurée par le matériau polymère, qui présente les caractéristiques de matière avantageuses à cet effet et le joint étant un produit de co-polymérisation et les pièces d'étanchéité (A, B) formant une liaison par étanchéité sur la base de matériaux polymère de types divers, qui se distinguent par différentes caractéristiques mécaniques et/ou chimiques et/ou biologiques,
a) les deux pièces d'étanchéité (A, B) consistant dans un matériaux polymère,
aa) en tant que base de matériau polymère, du SBR étant utilisé pour la première pièce d'étanchéité (A) et de l'EPDM étant utilisé pour la deuxième pièce d'étanchéité (B) ou
ab) en tant que base de matériau polymère, de l'EPDM étant utilisé pour la première pièce d'étanchéité (A) et du SBR étant utilisé pour la deuxième pièce d'étanchéité (B) ou
ac) en tant que base de matériau polymère, du NBR étant utilisé pour la première pièce d'étanchéité (A) et de l'EPDM étant utilisé pour la deuxième pièce d'étanchéité (B) ou
ad) en tant que base de matériau polymère, de l'EPDM étant utilisé pour la première pièce d'étanchéité (A) et du NBR étant utilisé pour la deuxième pièce d'étanchéité (B) ou
ae) en tant que base de matériau polymère, du NBR étant utilisé pour la première pièce d'étanchéité (A) et du SBR étant utilisé pour la deuxième pièce d'étanchéité (B) ou
af) en tant que base de matériau polymère, du SBR étant utilisé pour la première pièce d'étanchéité (A) et du NBR étant utilisé pour la deuxième pièce d'étanchéité (B) ou
b) la première pièce d'étanchéité (A) consistant dans un matériau élastomère et la deuxième pièce d'étanchéité (B) consistant dans un élastomère thermoplastique ou
c) la première pièce d'étanchéité (A) consistant dans une matière synthétique thermoplastique et la deuxième pièce d'étanchéité (B) consistant dans un matériau élastomère ou
d) la première pièce d'étanchéité (A) consistant dans un matériau élastomère et la deuxième pièce d'étanchéité (B) consistant dans une matière synthétique thermoplastique ou
e) la première pièce d'étanchéité (A) consistant dans une matière synthétique thermoplastique et la deuxième pièce d'étanchéité (B) consistant dans un matériau élastomère ou
f) la première pièce d'étanchéité (A) consistant dans un élastomère thermoplastique et la deuxième pièce d'étanchéité (B) consistant dans une matière synthétique thermoplastique ou
g) la première pièce d'étanchéité (A) consistant dans une matière synthétique thermoplastique et la deuxième pièce d'étanchéité (B) consistant dans un élastomère thermoplastique.

10. Utilisation selon la revendication 9, **caractérisée en ce qu'**on utilise des élastomères thermoplastiques (TPE) sur base de styrène (TFE-S), des élastomères thermoplastiques non réticulés ou partiellement réticulés sur base d'oléfine (TPE-O) ou des élastomères thermoplastiques entièrement réticulés sur base d'oléfine (TPE-V).

11. Utilisation selon la revendication 9, **caractérisée en ce que** l'élastomère thermoplastique (TPE) est un coupage d'une matière synthétique thermoplastique et d'un caoutchouc au moins partiellement réticulé, notamment sur la base d'un produit polymérisé mixte d'éthylène-propylène-diène (EPDM).

12. Utilisation selon la revendication 9, **caractérisée en ce que** la matière synthétique thermoplastique est du polychlorure de vinyle (PVC).

13. Utilisation selon l'une quelconque des revendications 9 à 12, **caractérisée en ce que** la première pièce d'étanchéité (A) et la deuxième pièce d'étanchéité (B) ont la même dureté Shore.

14. Utilisation selon l'une quelconque des revendications 9 à 12, **caractérisée en ce que** la première pièce d'étanchéité (A) et la deuxième pièce d'étanchéité (B) ont différentes duretés Shore.

15. Utilisation selon la revendication 13 ou 14, **caractérisée en ce que** pour la première pièce d'étanchéité (A) et pour la deuxième pièce d'étanchéité (B), l'ordre de dureté Shore est de 30 DEG à 80 DEG.

16. Utilisation selon l'une quelconque des revendications 9 à 15, **caractérisée en ce que** la liaison par adhérence entre la première pièce d'étanchéité (A) et la deuxième pièce d'étanchéité (B) est créée dans le cadre de la co-extrusion, sous température et sous pression.
